# EUROPEAN PATENT SPECIFICATION

(11) **EP 3 153 815 B1**
(45) Date of publication and mention of the grant of the patent: **04.07.2018**
(21) Application number: 15803513.9
(22) Date of filing: 12.05.2015
(51) Int. Cl.: G01B 11/27, B29D 30/30, B65H 26/00

(54) **MEASURING DEVICE**
MESSVORRICHTUNG
DISPOSITIF DE MESURE

(30) Priority: 06.06.2014 JP 2014118019
(43) Date of publication of application: 12.04.2017
(73) Proprietor: Bridgestone Corporation, Tokyo 104-8340 (JP)
(72) Inventor: NAKANO, Ryohei, Tokyo 104-8340 (JP)
(74) Representative: Oxley, Robin John George
(86) International application number: PCT/JP2015/002399
(87) International publication number: WO 2015/186299

(56) References cited:
- DE-A1- 10 036 010
- JP-A- H06 213 624
- JP-A- H06 213 624
- JP-A- H07 332 926
- JP-A- 2002 131 030
- JP-A- 2010 197 240
- JP-A- 2012 193 980
- US-A1- 2005 117 708
- US-A1- 2007 247 636
- US-A1- 2014 015 957

## Description

This disclosure relates to a combination of a drum, a band-shaped member and a measurement apparatus that calculates the arrangement condition and the like of the band-shaped member disposed on the drum.

### BACKGROUND

Objects such as raw tires are typically molded by attaching band-shaped members, such as tread material, belt material, carcass material, and the like, onto a drum.

In order to ensure quality, such as uniformity of the tire, for example the band-shaped members constituting the raw tire need to be placed at an accurate position (position in the circumferential direction and position in the width direction) on the drum. Therefore, a variety of methods have been proposed for calculating (measuring) the arrangement condition of a band-shaped member disposed on a drum.

For example, WO2006/019070 (PTL 1) proposes a method of measuring the length of a band-shaped member by using two-dimensional laser displacement sensors that emit laser beams inclined at a certain angle with respect to the longitudinal direction of the band-shaped member and relatively moving the sensors in the longitudinal direction of the band-shaped member so as to calculate the position of the longitudinal direction edges of the band-shaped member just after attaching the band-shaped member onto a molding drum.

### CITATION LIST

### Patent Literature

PTL 1: WO2006/019070

Reference is also made to US 2007/247636, JP 06-213624, DE 100 36 010, US 2005/117708 and US 2014/015957.

### SUMMARY

### (Technical Problem)

The attachment position, orientation, and the like of the measurement sensors relative to the drum may differ from the expected settings, however, and the measurement sensors may deteriorate, causing the accuracy of the measurement sensors to worsen. If the accuracy of the measurement sensors worsens, it may become impossible to calculate the position and the like of the band-shaped member accurately. Therefore, it is necessary to inspect the accuracy of the measurement sensor periodically. It is the on-site operator who inspects the accuracy, thus leading to an increase in the amount of labor by the operator. Furthermore, inspection by the operator requires extra tools, such as a specialized jig.

Therefore, it would be helpful to provide a measurement apparatus that can inspect the accuracy of a measurement sensor easily, without requiring a specialized jig or the like.

Furthermore, it would be helpful to provide a measurement apparatus that can reduce the amount of labor by the operator.

### (Solution to Problem)

The present invention provides a combination of a drum, a band-shaped member and a measurement apparatus comprising: a plurality of measurement markers disposed on an outer circumferential surface of the drum, the band-shaped member being arranged on the outer circumferential surface of the drum so as not to overlap with the plurality of measurement markers; at least one measurement sensor configured to acquire measurement information on only a portion of the band-shaped member near the longitudinal edge of the band-shaped member and simultaneously acquire position information on a portion of the plurality of measurement markers near the longitudinal edge of the band-shaped member when the band-shaped member is arranged on the drum; and a calculator configured to calculate a position of a measurement marker in the plurality of measurement markers based on the measurement information acquired by the measurement sensor and to calculate misalignment between an actual position of the measurement marker measured in advance and the position of the measurement marker calculated by the calculator, wherein the calculator is further configured to calculate an arrangement condition of the band-shaped member on the drum based on the measurement information on the band-shaped member acquired by the measurement sensor.

In this disclosure, the "accuracy of the measurement sensor" refers not only to the accuracy of the measurement sensor itself, but also to overall measurement accuracy related to the measurement sensor, including the accuracy of the attachment orientation of the measurement sensor, the accuracy of the attachment position of the measurement sensor, and the like.

### (Advantageous Effect)

According to this disclosure, the measurement apparatus can calculate the accuracy of a measurement sensor easily, without requiring a specialized jig or the like.

### BRIEF DESCRIPTION OF THE DRAWINGS

In the accompanying drawings:
FIG. 1 is a perspective view illustrating a combination of a drum, a band-shaped member and a measurement apparatus according to one of the disclosed embodiments in a state in which a band-shaped member has been disposed;

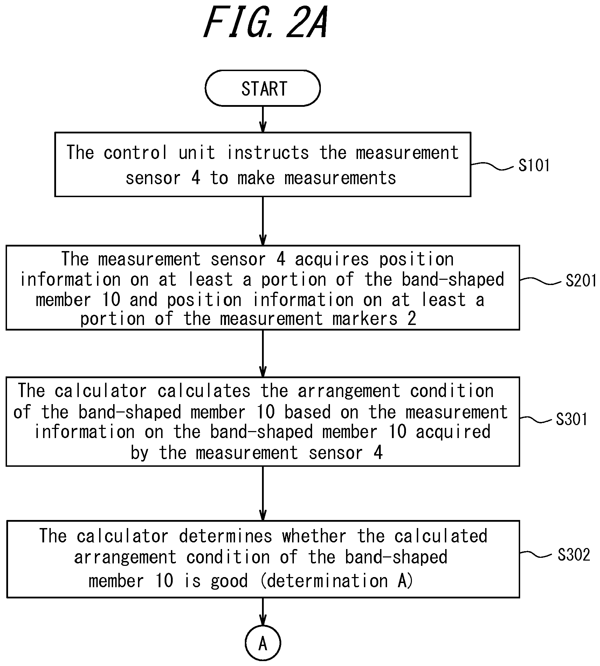

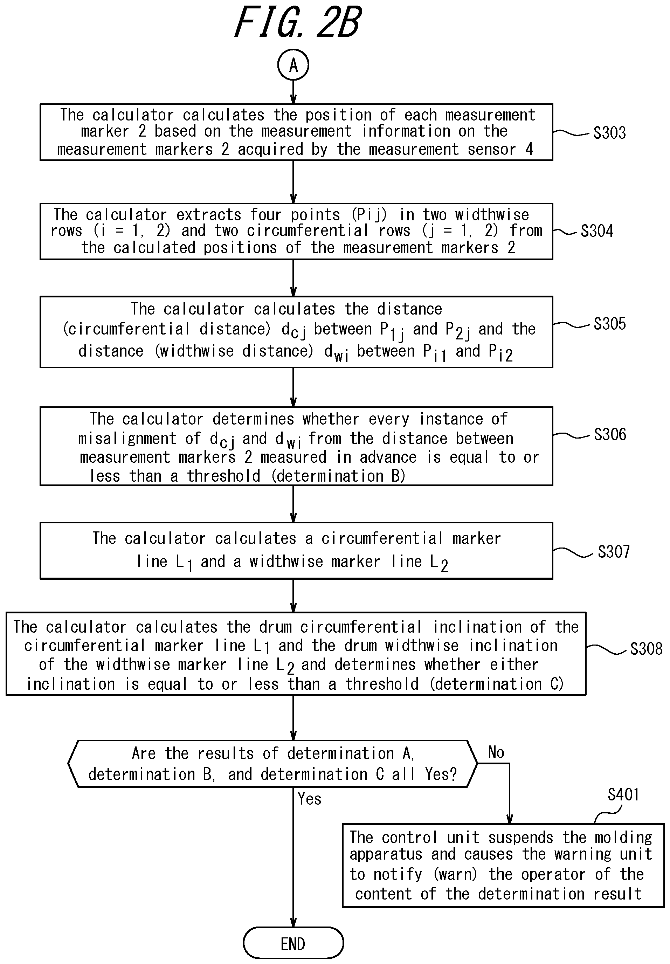

FIG. 2A is a flowchart illustrating an example of a method for a combination of a drum, a band-shaped member and a measurement apparatus according to one of the disclosed embodiments to calculate the arrangement condition of a band-shaped member, and FIG. 2B is a flowchart illustrating an example of a method for a combination of a drum, a band-shaped member and a measurement apparatus according to one of the disclosed embodiments to calculate misalignment between the actual position of the measurement marker measured in advance and the calculated position of the measurement marker and misalignment of the attachment orientation of the measurement sensor; and
FIG. 3 is a partially enlarged front view of the measurement apparatus in FIG. 1, including measurement markers extracted by a calculator.

### DETAILED DESCRIPTION

The following describes a combination 1 of a drum, a band-shaped member and a measurement apparatus (referred to as a 'meaurement apparatus 1' below for brevity) according to one of the embodiments of this disclosure based on the drawings.

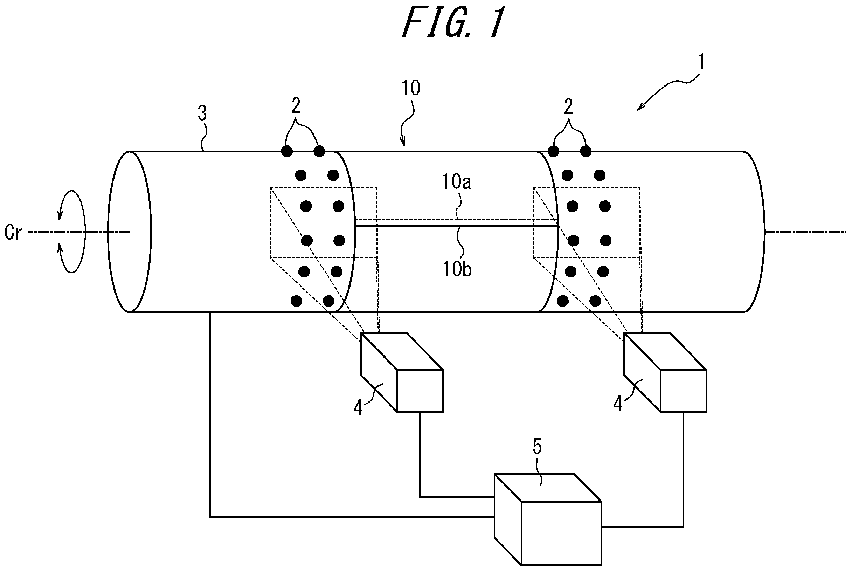

The measurement apparatus 1 according to one of the disclosed embodiments illustrated in FIG. 1 includes measurement markers 2 disposed on the outer circumferential surface of a drum 3, which for example constitutes a molding drum for a tire or the like and which has a band-shaped member 10, such as the tread material of a tire, arranged on the outer circumferential surface thereof; at least one (two in the embodiment illustrated in FIG. 1) measurement sensor 4 that acquires position information on at least a portion of the measurement markers 2 (four measurement markers 2 in front of the measurement sensor 4 in the embodiment illustrated in FIG. 1); and a calculator 5 that, based on the measurement information on the measurement marker 2 acquired by the measurement sensor 4, calculates the position of the measurement marker 2 and calculates a misalignment between the actual position of the measurement marker 2 measured in advance and the position of the measurement marker 2 calculated by the measurement sensor 4.

The measurement markers 2 are formed on the outer circumferential surface of the drum 3, i.e. on the outer surface. The actual shape and arrangement (position information) of the measurement markers 2 is stored in the calculator 5. As described below, by comparing the actual shape and position information of a measurement marker 2 with the measurement information of the measurement marker 2 acquired by the measurement sensor 4, the misalignment between the actual position of the measurement marker 2 measured in advance and the position of the measurement marker calculated by the calculator 5 can be calculated.

The measurement markers 2 may be formed on the outer surface of the drum 3 by imprinting or the like. The measurement sensor 4 can identify unevenness on the outer surface of the drum 3. The measurement sensor 4 may be configured to identify a difference in color on the outer surface of the drum 3. The measurement markers 2 may be configured to emit light, and the measurement sensor 4 may be configured to measure the light. The measurement markers 2 may also be attached to the outer surface of the drum 3, or the measurement markers 2 may be embedded in the drum 3.

In the embodiment illustrated in FIG. 1, the measurement markers 2 have a round appearance. The measurement markers 2 may, however, have a triangular, square, or other such appearance.

The position information of the measurement markers 2 may be acquired by, for example, imaging the measurement markers 2 with the measurement sensor 4 that is configured by a camera and measuring the outline of the measurement markers 2. The measurement markers 2 are arranged so as not to overlap with the band-shaped member 10, such as tread material, when the band-shaped member 10 is arranged on the drum 3, so that the position information on the measurement markers 2 can be acquired. In this embodiment, the measurement markers 2 are disposed on both sides, in the width direction of the drum 3 (drum axial direction), of the position for placement of the band-shaped member 10. On each side of the band-shaped member 10 in the width direction of the drum 3, the measurement markers 2 are arranged at constant intervals in the circumferential direction of the drum 3 in two rows in the width direction of the drum 3. In other words, the measurement markers 2 are arranged so that there are two rows, adjacent in the width direction of the drum 3, of measurement markers 2 that are arranged at constant intervals in the circumferential direction of the drum 3. For example, the circumferential distance between centers of measurement markers 2 adjacent in the circumferential direction may be 10 mm, and the widthwise distance between centers of measurement markers 2 adjacent in the width direction may also be 10 mm. When the measurement markers 2 are arranged at equal intervals in the circumferential direction, the actual distance from the two measurement markers 2 that are adjacent in the circumferential direction and the width direction of the drum 3 is the same for any measurement marker 2 for which the measurement sensor 4 acquires position information at any position around the drum 3. As a result, the calculator 5 can easily and accurately calculate the misalignment between the actual position of the measurement marker 2 measured in advance and the calculated position of the measurement marker 2.

Three rows or more (three circumferential direction rows), for example, of the measurement markers 2 may also be disposed on both sides in the width direction of the drum 3. Two or more rows of the measurement markers 2 may be disposed on only one side in the width direction of the drum 3. It is also possible to dispose just one row of the measurement markers 2 on one or both sides of the band-shaped member 10 in the width direction. As long as the actual position of the measurement markers 2 and/or the actual distance between adjacent measurement markers 2 is known or measured in advance, the measurement markers 2 need not be arranged in a row at equal intervals as described above.

Also, instead of arranging the measurement markers 2 as isolated dots as illustrated in FIG. 1, for example measurement markers may be formed as a grid on the drum 3 by forming measurement markers extending linearly in the circumferential direction and measurement markers extending linearly in the width direction of the drum 3.

The drum 3 is formed as a hollow or solid cylinder and is rotated about a central axis Cr by a drive unit, such as a servomotor. The calculator 5 may be notified of the phase in the circumferential direction of the drum 3. The drum 3 may be capable of expanding and contracting in the radial direction, and in this case, the calculator 5 may be notified of the diameter of the drum 3.

The measurement sensor 4 acquires position information on at least a portion of the measurement markers 2 (four measurement markers 2 in front of the each measurement sensor 4 in the embodiment illustrated in FIG. 1). The measurement sensor 4 also acquires position information on at least a portion of the band-shaped member 10, near the longitudinal edges 10a and 10b of the band-shaped member 10 when the band-shaped member 10 is disposed on the outer surface of the drum 3.

In the embodiment described here, the measurement sensor 4 is configured by a camera. The measurement sensor 4 may, however, be configured by a laser displacement sensor or the like. Generally, the measurement sensor 4 may be configured by an image sensor that converts the degree of brightness of light emitted from an object of imaging into an electrical signal.

In this embodiment, the measurement sensor 4 configured by a camera is fixed at a position and an orientation that allow acquisition of position information on the measurement markers 2 and the band-shaped member 10, i.e. at a position that is separate from the drum 3 and oriented so that the imaging direction faces the drum 3. The relative position and relative orientation of the drum 3 and the measurement sensor 4 are stored in the calculator 5.

In the embodiment illustrated in FIG. 1, two measurement sensors 4 are provided. The measurement sensors 4 acquire position information on the measurement markers 2 near the longitudinal edges 10a and 10b disposed at the sides, in the width direction, of the band-shaped member 10. A configuration with only one measurement sensor that acquires the position information on the measurement markers 2 at both sides, in the width direction, of the band-shaped member 10 may be adopted.

The number of measurement sensors that are provided may be three or more, such as four. Two of these measurement sensors may be configured to acquire only the position information near both ends, in the width direction of the drum 3, of the longitudinal edges 10a and 10b of the disposed band-shaped member 10, and the other two measurement sensors may be configured to acquire the position information on the measurement markers 2 at both sides, in the width direction, of the band-shaped member 10. The acquired measurement information on the band-shaped member 10 and the acquired position information on the measurement markers 2 may be compared, for example to calculate the relative position of the two.

The calculator 5 is connected to each of the two measurement sensors 4. In this embodiment, based on the measurement information on the measurement markers 2 acquired by the measurement sensors 4, the calculator 5 calculates the position of the measurement markers 2 and calculates the misalignment between the actual position of the measurement markers 2 measured in advance and the calculated position of the measurement markers 2. Based on the measurement information on the measurement markers 2 acquired by the measurement sensors 4, the calculator 5 can also calculate the misalignment in the attachment orientation of the measurement sensors 4. Based on the measurement information on the band-shaped member 10 acquired by the measurement sensors 4, the calculator 5 can also calculate the arrangement condition of the band-shaped member 10 on the drum 3. Details on the method of calculation are provided below.

The calculator 5 may be configured by a computer system or other hardware that can execute program instructions, such as a personal computer. The connection between the measurement sensors 4 and the calculator 5 may be a wired or a wireless connection.

The measurement apparatus of this embodiment further includes a control unit. The control unit controls rotational movement of the drum 3 (i.e. the phase in the circumferential direction of the drum 3 and the number of rotations). The control unit controls the measurement sensors 4 and issues measurement instructions and the like. The control unit may be configured by a controller that controls operations in accordance with a program, such as a Programmable Logic Controller (PLC).

When the calculation result by the calculator 5 satisfies a predetermined warning condition, the control unit preferably stops operation of the drum 3 and the measurement sensors 4 and warns the operator with a warning unit configured, for example, by a warning light, buzzer, monitor, or the like. The warning condition may, for example, be a determination that quality of the band-shaped member 10 to be molded or the like on the drum 3 cannot be guaranteed. In greater detail, the warning condition may be a large misalignment between the actual position of the measurement markers 2 measured in advance and the calculated position of the measurement markers 2 or a large misalignment in the attachment orientation of the measurement sensors 4. In addition to or instead of this warning condition, the warning condition may be a poor arrangement condition of the band-shaped member 10 on the drum 3. By warning the operator immediately when the measurement sensor 4 or the arrangement position of the band-shaped member 10 needs to be adjusted, the quality of the product that is arranged on the drum 3 and, for example, molded can effectively be guaranteed. In this way, according to the measurement apparatus of this embodiment, the accuracy of the measurement sensor can be inspected when molding the band-shaped member 10 on the drum 3.

With reference to the flowcharts in FIG. 2A and FIG. 2B, the following provides details on an example of a method for the aforementioned measurement apparatus according to one of the disclosed embodiments to calculate the arrangement condition of a band-shaped member on the drum, the misalignment between the actual position of the measurement marker measured in advance and the calculated position of the measurement marker, and the misalignment in the attachment orientation of the measurement sensor. In the embodiment illustrated in FIG. 1, the measurement markers 2 and the measurement sensor 4 are located on both sides, in the width direction, of the band-shaped member 10, and the following calculation processing is performed on each side, in the width direction, of the band-shaped member 10.

After rotating the drum 3 and disposing the band-shaped member 10 on the outer surface of the drum 3, the control unit instructs the measurement sensor 4 to measure the band-shaped member 10 and the measurement markers 2 (S101).

Upon receiving the instruction from the control unit, the measurement sensor 4 makes a measurement to acquire position information on at least a portion of the band-shaped member 10 and position information on at least a portion of the measurement markers 2 (S201). In the example described here, the measurement sensors 4 that are configured by cameras each image an area near an end, in the width direction, of the longitudinal edges 10a and 10b of the band-shaped member 10 and the measurement markers 2 formed at one side, in the width direction, of the band-shaped member 10, this area and these measurement markers 2 being in front of the measurement sensor 4.

In this example, after the band-shaped member 10 is wound on the drum 3, the areas near the ends, in the width direction, of the longitudinal edges 10a and 10b of the band-shaped member 10 and the measurement markers 2 are imaged (the position is measured) simultaneously to acquire position information. These measurements also do not need to be taken after the band-shaped member is wound on the drum 3. Also, the band-shaped member 10 in any desired arrangement condition may be measured. For example, the measurement markers 2 may be measured while the band-shaped member 10 is being wound on the drum 3. Measurement near the longitudinal edges 10a and 10b of the band-shaped member 10 may be made after the band-shaped member 10 is completely wound. In other words, the measurement timing of the band-shaped member 10 may be during winding of the band-shaped member 10 on the drum 3. Also, measurement may be made after winding of the band-shaped member 10 near the longitudinal edges. The measurement timing of the measurement markers 2 may be upon the start of winding, during winding, or after completion of winding of the band-shaped member 10. For efficient measurement, the band-shaped member 10 and the measurement markers 2 are measured simultaneously.

The measurement information acquired by the measurement sensor 4 is provided (transmitted) to the calculator 5. First, based on the measurement information on the band-shaped member 10 acquired by the measurement sensor 4, the calculator 5 calculates the arrangement condition of the band-shaped member 10 on the drum 3 (S301). In the example described here, from the image of the area near the longitudinal edges 10a and 10b of the band-shaped member 10 captured by the measurement sensor 4, the calculator 5 extracts the outline shape of the band-shaped member 10 within the image and calculates the arrangement condition of the band-shaped member 10.

In this example, the calculator 5 determines (determination A in FIG. 2A) whether the calculated arrangement condition of the band-shaped member 10 is good (S302). The arrangement condition for which the determination is made and the standard for determination as a good arrangement (good/poor determination) may, for example, be selected freely using a regular method. For example, the connection condition near the edges of the band-shaped member 10 may be determined to be good or poor by determining the connection condition to be good (Yes for the determination result of the aforementioned determination A) when, in the image of the area near the longitudinal edges 10a and 10b of the band-shaped member 10, only one of the edges 10a and 10b can be recognized and to be poor when both edges can be recognized. The absolute arrangement position of the band-shaped member 10 on the drum 3 may be determined to be good or poor by determining that the arrangement position is good (Yes for the determination result of the aforementioned determination A) if the misalignment between the actual arrangement position of a particular site on the band-shaped member 10 and the expected arrangement position of the site is equal to or less than (or simply less than) a preset threshold (for example, ±2.0 mm) and to be poor when the misalignment is greater than (or equal to or greater than) the threshold. Furthermore, the winding condition of the band-shaped member 10 in the width direction may be determined to be good or poor by determining that the winding condition is good (Yes for the determination result of the aforementioned determination A) if the misalignment in the width direction of the drum 3 between the position of the width direction end of one longitudinal edge 10a of the band-shaped member 10 and the position of the width direction end of the other longitudinal edge 10b is equal to or less (or simply less) than a preset threshold and to be poor when the misalignment is greater (or equal to or greater) than the threshold. These standards may be combined to make the good/poor determination of the arrangement condition.

In this example, after calculating the arrangement condition of the band-shaped member 10 with respect to the drum 3, the calculator 5 calculates the position of each measurement marker 2 from the measurement information, acquired by the measurement sensor 4, on the measurement markers 2 (S303 in FIG. 2B). For example, the calculator 5 extracts the outline shape of each measurement marker 2 from the image captured by the measurement sensor 4 and calculates the center position of each measurement marker 2. In this way, the position of each measurement marker 2 can be calculated as the center position.

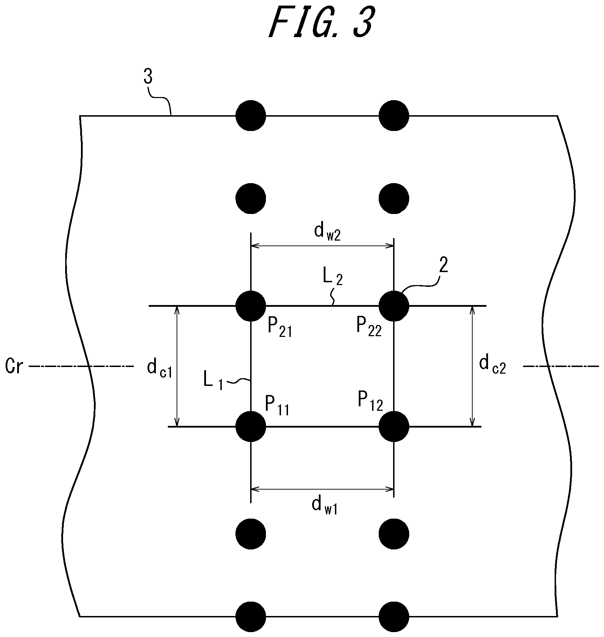

Referring to FIG. 3, the calculator 5 extracts four measurement markers 2 (Pᵢⱼ) in two adjacent circumferential rows (i = 1, 2) and two adjacent widthwise rows (j = 1, 2) from the calculated positions (center positions) of the measurement markers 2 (S304). For example, the four measurement markers 2 that are closest to the center of the image captured by the measurement sensor 4, for which the calculation error is usually the smallest, may be extracted.

In the measurement apparatus according to the embodiment illustrated in FIG. 1, the imaging range of each of the measurement sensors 4 includes only four measurement markers 2. Hence, the imaged measurement markers 2 can be extracted directly as the aforementioned four measurement markers 2 (Pᵢⱼ). The number of measurement markers 2 that are imaged by the measurement sensor 4 and for which position information is acquired, however, may be greater than four. Furthermore, the extracted markers 2 are not limited to two circumferential rows and two widthwise rows. For example, one row may be extracted in the circumferential and/or width direction, or three or more rows may be extracted. When one circumferential or widthwise row of measurement markers 2 is extracted, the number of measurement markers 2 for which the measurement sensor 4 acquires position information may be less than four.

The calculator 5 calculates the distance between the extracted measurement markers Pᵢⱼ, i.e. as illustrated in FIG. 3, the distance (in the circumferential direction of the drum 3) d_{c1} between P₁₁ and P₂₁, the distance d_{c2} between P₁₂ and P₂₂, the distance (in the width direction of the drum 3) d_{W1} between P₁₁ and P₁₂, and the distance d_{W2} between P₂₁ and P₂₂ (S305). Since the measurement markers 2 are formed on the outer surface of the drum 3 that is a hollow or solid cylinder, the distance between extracted measurement markers 2 may be calculated taking into consideration the diameter (radius of curvature) or the like of the drum 3.

After calculating the circumferential distance d_{cj} (j = 1, 2) and the widthwise distance d_{wi} (i = 1, 2) between extracted measurement markers 2, the calculator 5 calculates the misalignment from the actual circumferential distance and widthwise distance between measurement markers 2 which are known or measured in advance (in this example, both 10 mm). At this point, it is determined (determination B in FIG. 2B) whether every instance of misalignment is equal to or less (or simply less) than a preset threshold (S306). This threshold may, for example, be equal to or less than a fraction of the threshold used in determination A related to the band-shaped member as exemplified above. For example, this threshold may be ±0.2 mm, which is one tenth of the threshold used in determination A. The determination standard for determination B may be "equal to or less than" the threshold or "less than" the threshold. FIG. 2B illustrates an example of the determination standard being "equal to or less than" the threshold. Whether the determination standard is "equal to or less than" the threshold or "less than" the threshold is decided unambiguously (alternatively and exclusively) by design. For example, it is assumed to have been decided that during certain control, the allowable maximum misalignment in the circumferential direction between measurement markers 2 is decided, and it is determined in determination B whether the misalignment of the circumferential distance between measurement markers 2 is "equal to or less than" this maximum value (threshold). In this case, the determination is not subsequently changed to one of whether the misalignment in the circumferential distance between measurement markers 2 is "less than" the threshold. The same holds in the above-described determination A and the below-described determination C.

By comparing the circumferential distance and the widthwise distance between the measurement markers 2 as calculated by the calculator 5 with the actual circumferential distance and the widthwise distance between the measurement markers 2 in this way, the misalignment between the actual position of the measurement markers 2 measured in advance and the calculated position of the measurement markers 2 can be calculated. The reason is that if, between any two measurement markers 2, there is misalignment in the circumferential distance or the widthwise direction, it can be assumed that at least one of the two calculated positions of the measurement markers 2 is misaligned from the actual position measured in advance.

Here, when misalignment in either the circumferential distance or the widthwise direction between at least one pair of measurement markers 2 exceeds (or is greater than or equal to) the threshold (No for the determination result of the aforementioned determination B), then the accuracy of the measurement sensor 4 itself can be judged not to be good. In this way, according to the measurement apparatus 1 of this embodiment, the accuracy of the measurement sensor 4 itself can be inspected easily, without requiring a specialized jig or the like. The aforementioned threshold may be different for the circumferential distance and the widthwise distance.

As described above, when acquiring the position information on the band-shaped member 10 disposed on the drum 3, the measurement apparatus 1 of this embodiment acquires the position information on the measurement markers 2 and simultaneously inspects the accuracy of the measurement sensor 4. Therefore, according to the measurement apparatus 1 of this embodiment, the labor by the on-site operator for inspecting the accuracy of the measurement sensor 4 can be eliminated.

As described above, based on the measurement information on the measurement markers 2 acquired by the measurement sensor 4, the calculator 5 extracts the measurement markers Pᵢⱼ. In this example, the calculator 5 then calculates a circumferential marker line L₁ and a widthwise marker line L₂, as illustrated in FIG. 3, from the positions of the extracted measurement markers Pᵢⱼ (S307). The circumferential marker line L₁ and the widthwise marker line L₂ are respectively formed by connecting a certain measurement marker (for example, the measurement marker P₂₁ in FIG. 3) with the measurement markers P₁₁ and P₂₂ that are adjacent thereto in the circumferential direction (the direction perpendicular to the drum axial direction) and the widthwise direction (the drum axial direction) of the drum 3. A circumferential marker line that connects two other measurement markers (for example, P₁₂ and P₂₂) and/or a widthwise marker line that connects two other measurement markers (for example, P₁₁ and P₁₂) may be further calculated.

In the example illustrated here, the circumferential marker line L₁ and the widthwise marker line L₂ are both calculated, but only one may be calculated instead. In this case, only one of the below-described drum circumferential inclination and drum widthwise inclination is calculated, and it is determined whether this one inclination exceeds a threshold.

After calculating the circumferential marker line L₁ and the widthwise marker line L₂, the calculator 5 calculates the drum circumferential inclination that is the inclination (angle) of the circumferential marker line L₁ relative to the circumferential direction of the drum 3 and the drum widthwise inclination that is the inclination (angle) of the widthwise marker line L₂ relative to the width direction of the drum 3. At this point, it is determined (determination C in FIG. 2B) whether either of the drum circumferential inclination and the drum widthwise inclination is equal to or less (or simply less) than a preset threshold (S308). By comparing the direction of the circumferential marker line L₁ and the direction of the widthwise marker line L₂ calculated by the calculator 5 with the actual circumferential direction and width direction of the drum 3, the misalignment in the attachment orientation of the measuring sensor 4 can be calculated, thereby allowing the accuracy of the measurement sensor 4 to be inspected more precisely. In other words, when at least one of the drum circumferential inclination and the drum widthwise inclination exceeds (or is greater than or equal to) the threshold (No for the determination result of the aforementioned determination C), then the accuracy of the attachment orientation of the measurement sensor 4 can be judged not to be good. By judging the accuracy of the attachment orientation of the measurement sensor 4 in this way, the accuracy of the measurement sensor 4 can be inspected more precisely. The aforementioned threshold may also be different for the drum circumferential direction and the drum width direction.

Finally, the control unit is notified of the results of the determinations made by the calculator 5, i.e. the determination result regarding the arrangement condition of the band-shaped member 10 (result of determination A), the determination result regarding misalignment in the distance between measurement markers 2 (result of determination B), and the determination result regarding the drum circumferential inclination and the drum widthwise inclination (result of determination C). The control unit makes an overall determination of whether the results of the aforementioned determination A, determination B, and determination C are all Yes. If the result of the overall determination is Yes, i.e. if the determination results for determinations A, B, and C are all Yes, then the control unit proceeds to the next step in operation of the molding apparatus that includes the drum 3 (END).

On the other hand, if the result of the overall determination is No, i.e. if at least one of the results for determinations A, B, and C is No, then the control unit suspends the molding apparatus (for example, suspends rotation of the drum 3 and measurement by the measurement sensors 4) (S401).

When the warning condition is satisfied, the control unit causes the warning unit to warn the on-site operator and notify the operator of the determination result (S401). The warning condition may be that the result of the overall determination is No. The reason is that when the result of the overall determination is No, it can be judged that at least one of the arrangement condition of the band-shaped member 10, the accuracy of the measurement sensor 4 itself, and the accuracy of the attachment orientation of the measurement sensor 4 is not good. When the result of determination B or C regarding the accuracy of the measurement markers 2 is No, the accuracy of the measurement sensor is not good, and therefore it can be judged that the result of determination A regarding the band-shaped member 10 is unreliable.

The content of the determination result of which the operator is notified by the warning unit may be the details on the determination for which the result was No. The warning by the warning unit may be issued in various ways such as flashing a warning light, sounding a buzzer, and displaying an error message including the determination result on a monitor.

The on-site operator receives the warning and inspects the band-shaped member 10 and/or the measurement sensor 4. Subsequently, the operator resolves the problem by performing maintenance work such as rectifying the arrangement condition of the band-shaped member 10 (fixing the winding condition or winding the band-shaped member 10 again), replacing the measurement sensor 4, or fixing the attachment orientation of the measurement sensor 4. The content of the error message may be used during inspection or maintenance work.

In the above-described example, by calculating the distance between measurement markers 2 from the calculated position of the measurement markers 2 and calculating the misalignment between the calculated distance and the actual distance, the misalignment in the position (calculated position) of the measurement markers 2 from the actual position measured in advance is calculated. However, by using the calculated position of the measurement markers 2 for direct calculation of the misalignment between the calculated position of the measurement markers 2 and the actual position of the measurement markers 2 measured in advance, the misalignment in the attachment position of the measurement sensor 4 can also be calculated. The accuracy of the attachment position of the measurement sensor 4 can be judged with a method such as this one as well.

The above-described flowcharts are only examples. A measurement apparatus according to this disclosure may be used by changing the flowcharts as necessary. For example, in the above-described example, an action such as suspending the molding apparatus is taken (S401) when a predetermined condition is satisfied in the overall determination after determinations A, B, and C have all been made. The molding apparatus may be suspended immediately (S401), however, when the result of determination B is No, even before all of the determinations A to C have been made. When the results of determination B regarding the measurement markers 2 is No, the accuracy of the measurement sensor 4 itself cannot be considered to be good. Therefore, even if the result of determination A regarding the arrangement condition of the band-shaped member 10 is Yes (good), the actual arrangement condition is not necessarily good. By taking an action such as suspending the molding apparatus without making determination C at the point when the result of determination B is No, the measurement sensor 4 and the arrangement condition of the band-shaped member 10 can be inspected more efficiently.

In the above-described flowchart, determination B and the accompanying steps (S305 to S306) may be switched in order with determination C and the accompanying steps (S307 to S308). Furthermore, in the above-described flowchart, determination A regarding the band-shaped member 10 and the accompanying steps (S301 to S302) may be switched in order with determinations B and C regarding the measurement markers 2 and the accompanying steps (S303 to S308). For example, before starting to wind the band-shaped member 10 on the drum 3 or at the start of winding, determinations B and C may first be made. Subsequently, when the result is No for determination B or determination C, winding may be suspended for inspection of the measurement sensor 4. On the other hand, when the result is Yes for determination B and determination C, the band-shaped member 10 may be wound, and determination A regarding the band-shaped member 10 may also be made. With this approach, determination A regarding the band-shaped member 10 is made in a state in which the reliability of the measurement sensor 4 has been assured. Hence, the reliability of the result for determination A can efficiently be assured. In this case, the other steps illustrated in the flowcharts in FIG. 2 are also changed as necessary.

### REFERENCE SIGNS LIST

- 1: Combination of a drum, a band-shaped member and a measurement apparatus
- 2: Measurement marker
- 3: Drum
- 4: Measurement sensor
- 5: Calculator
- 10: Band-shaped member
- P₁₁, P₁₂, P₂₁, P₂₂: Measurement marker

## Claims

1. A combination (1) of a drum (3), a band-shaped member (10) and a measurement apparatus comprising:
a plurality of measurement markers (2) disposed on an outer circumferential surface of the drum (3), the band-shaped member (10) being arranged on the outer circumferential surface of the drum (3) so as not to overlap with the plurality of measurement markers (2);
at least one measurement sensor (4) configured to acquire measurement information on only a portion of the band-shaped member (10) near the longitudinal edge (10a, 10b) of the band-shaped member (10) and simultaneously acquire position information on a portion of the plurality of measurement markers (2) near the longitudinal edge (10a, 10b) of the band-shaped member (10) when the band-shaped member (10) is arranged on the drum (3); and
a calculator (5) configured to calculate a position of a measurement marker (2) in the plurality of measurement markers (2) based on the measurement information acquired by the measurement sensor (4) and to calculate misalignment between an actual position of the measurement marker (2) measured in advance and the position of the measurement marker (2) calculated by the calculator (5),
wherein the calculator (5) is further configured to calculate an arrangement condition of the band-shaped member (10) on the drum (3) based on the measurement information on the band-shaped member (10) acquired by the measurement sensor (4).

2. The combination (1) of a drum (3), a band-shaped member (10) and a measurement apparatus of claim 1, wherein the calculator (5) is further configured to calculate misalignment of an attachment orientation of the measurement sensor (4) based on the measurement information acquired by the measurement sensor (4).

3. The combination (1) of a drum (3), a band-shaped member (10) and a measurement apparatus of claim 1 or 2, further comprising a warning unit configured to warn an operator when a result of calculation by the calculator (5) satisfies a predetermined warning condition.

4. The combination (1) of a drum (3), a band-shaped member (10) and a measurement apparatus of any one of claims 1 to 3, wherein the plurality of measurement markers (2) is arranged at constant intervals in a circumferential direction of the drum (3), in two or more rows in a width direction of the drum (3).

## Patentansprüche

1. Kombination (1) einer Trommel (3), eines bandförmigen Glieds (10) und eines Messgeräts, umfassend:
eine Mehrzahl von Messmarkierungen (2), welche auf einer äußeren Umfangsfläche der Trommel (3) angeordnet sind, wobei das bandförmige Glied (10) auf der äußeren Umfangsfläche der Trommel (3) so angeordnet ist, dass es nicht die Mehrzahl von Messmarkierungen (2) überlappt;
zumindest einen Messsensor (4), welcher konfiguriert ist um Messinformationen auf nur einem Abschnitt des bandförmigen Glieds (10) in der Nähe des Längsrandes (10a, 10b) des bandförmigen Glieds (10) zu erfassen und gleichzeitig Informationen auf einem Abschnitt der Mehrzahl von Messmarkierungen (2) in der Nähe des Längsrandes (10a, 10b) des bandförmigen Glieds (10) zu erfassen, wenn das bandförmige Glied (10) auf der Trommel (3) angeordnet wird; und
einen Rechner (5), welcher konfiguriert ist, um die Position einer Messmarkierung (2) unter der Mehrzahl von Messmarkierungen (2) auf der Basis der Messinformationen zu berechnen, welche vom Messsensor (4) erfasst werden, und um die Fehlausrichtung zwischen einer Ist-Position der Messmarkierung (2), welche im Vorab gemessen wird und die vom Rechner (5) berechnete Position der Messmarkierung (2) zu berechnen,
wobei der Rechner (5) ferner konfiguriert ist, um einen Anordnungszustand des bandförmigen Glieds (10) auf der Trommel (3) auf der Basis der Messinformationen über das bandförmige Glied (10) zu berechnen, welche vom Messsensor (4) erfasst werden.

2. Kombination (1) einer Trommel (3), eines bandförmigen Glieds (10) und eines Messgeräts nach Anspruch 1, wobei der Rechner (5) ferner konfiguriert ist, um die Fehlausrichtung einer Befestigungsrichtung des Messsensors (4) auf der Basis der Messinformationen zu berechnen, welche vom Messsensor (4) erfasst werden.

3. Kombination (1) einer Trommel (3), eines bandförmigen Glieds (10) und eines Messgeräts nach Anspruch 1 oder 2, ferner umfassend eine Warneinheit, welche konfiguriert ist, um einen Bediener zu warnen, wenn ein Ergebnis der Berechnung durch den Rechner (5) eine vorbestimmte Warnbedingung erfüllt.

4. Kombination (1) einer Trommel (3), eines bandförmigen Glieds (10) und eines Messgeräts nach einem der Ansprüche 1 bis 3, wobei die Mehrzahl von Messmarkierungen (2) in konstanten Intervallen in einer Umfangsrichtung der Trommel (3) angeordnet ist, in zwei oder mehr Reihen in einer Breitenrichtung der Trommel (3).

## Revendications

1. Combinaison (1) d'un tambour (3), d'un élément en forme de bande (10) et d'un appareil de mesure, comprenant :
plusieurs repères de mesure (2) disposés sur une surface circonférentielle externe du tambour (3), l'élément en forme de bande (10) étant agencé sur la surface circonférentielle externe du tambour (3) de sorte à ne pas chevaucher les plusieurs repères de mesure (2) ;
au moins un capteur de mesure (4) configuré pour acquérir des informations de mesure sur uniquement une partie de l'élément en forme de bande (10) près du bord longitudinal (10a, 10b) de l'élément en forme de bande (10) et pour acquérir simultanément des informations de position sur une partie des plusieurs repères de mesure (2) près du bord longitudinal (10a, 10b) de l'élément en forme de bande (10) lorsque l'élément en forme de bande (10) est agencé sur le tambour (3) ; et
un calculateur (5) configuré pour calculer une position d'un repère de mesure (2) dans les plusieurs repères de mesure (2), sur la base des informations de mesure acquises par le capteur de mesure (4), et pour calculer un désalignement entre une position actuelle du repère de mesure (2), mesurée d'avance, et la position du repère de mesure (2) calculée par le calculateur (5) ;
dans lequel le calculateur (5) est en outre configuré pour calculer un état d'agencement de l'élément en forme de bande (10) sur le tambour (3) sur la base des informations de mesure sur l'élément en forme de bande (10) acquises par le capteur de mesure (4).

2. Combinaison (1) d'un tambour (3), d'un élément en forme de bande (10) et d'un appareil de mesure selon la revendication 1, dans laquelle le calculateur (5) est en outre configuré pour calculer un désalignement d'une orientation de fixation du capteur de mesure (4) sur la base des informations de mesure acquises par le capteur de mesure (4).

3. Combinaison (1) d'un tambour (3), d'un élément en forme de bande (10) et d'un appareil de mesure selon la revendication 1 ou 2, comprenant en outre une unité d'avertissement configurée pour avertir un opérateur lorsqu'un résultat du calcul effectué par le calculateur (5) satisfait une condition d'avertissement prédéterminée.

4. Combinaison (1) d'un tambour (3), d'un élément en forme de bande (10) et d'un appareil de mesure selon l'une quelconque des revendications 1 à 3, dans laquelle les plusieurs repères de mesure (2) sont agencés à des intervalles constants dans une direction circonférentielle du tambour (3), dans deux ou plusieurs rangées dans une direction de la largeur du tambour (3).
